# EUROPEAN PATENT APPLICATION

(11) **EP 3 275 400 A1**
(43) Date of publication of application: **31.01.2018**
(21) Application number: 16771444.3
(22) Date of filing: 23.03.2016
(51) Int. Cl.: A61C 17/26

(54) **ELECTRIC TOOTHBRUSH**

(30) Priority: 27.03.2015 ES 201530359 U
(71) Applicant: SP Berner Plastic Group, S.L., 46960 Aldaia (Valencia) (ES)
(72) Inventor: ESCARPA GIL, Julián, 46960 Aldaia (Valencia) (ES)
(74) Representative: Ungria López, Javier
(86) International application number: PCT/ES2016/070209
(87) International publication number: WO 2016/156641

(57) **Abstract**

The invention relates to an electric toothbrush that comprises rotary heads, the brush being stably supportable on a surface by means of a projection (8). The brush comprises two rotary heads (7) which are rotated by a driveshaft (2) actuated by a motor (11), by means of a bevel gear (3) that meshes with a conical gear wheel (4) of the first rotary head (7), such that a first gear wheel (5) connected to the conical gear wheel (4) transmits the rotation of an intermediate wheel (6) situated between the rotary heads, the intermediate wheel, in turn, transmitting the rotation to a second gear wheel (5) of the second rotary head. The brush further comprises a whitening LED (12) and a pressure sensor (14) that varies the speed of the rotary heads according to the pressure on the user's teeth.

## Description

### OBJECT OF THE INVENTION

The present invention relates to an electric toothbrush that comprises rotary heads, the brush being stably supportable on a surface in order to place the toothpaste on said heads with no need to hold the brush.

### BACKGROUND OF THE INVENTION AND TECHNICAL PROBLEM TO BE SOLVED

Currently, it is common to find electric toothbrushes that perform the same function as one that is manually used or actuated, but wherein the number of passes are increased considerably.

The known electric toothbrushes comprise a lower end that supports them in a battery-charging device of said brushes when they are not used. The lower ends comprise a surface in which there is also a connection area with said charging device. These lower ends permit the vertical support thereof while connected to the charging devices or while supported on a horizontal surface.

One problem posed by the known electric toothbrushes is that they do not comprise means for supporting themselves horizontally and with the heads pointing upwards, such that they require the use of the user's two hands when placing the toothpaste before the use thereof.

This situation is problematic when the tube of toothpaste is nearly empty or when the user can only use one hand.

On the other hand, it is common, in specific models, that these electric brushes integrate two rotary heads in the brush head thereof, in which case it is necessary to have activation means of the rotation of said heads, which ensure correct operation without generating excessive noise or vibration.

### DESCRIPTION OF THE INVENTION

With the purpose of fulfilling these objectives and solving the different technical problems discussed up until now, in addition to others that are described later, the present invention discloses an electric toothbrush, which comprises a body of longitudinal extension that, in turn, comprises a brush head with two rotary heads having small bristles and a lower end, characterized in that said two rotary heads are rotated by a driveshaft actuated by a motor, by means of a bevel gear that meshes with a conical gear wheel of the first rotary head, such that a first gear wheel connected to the conical gear wheel transmits the rotation of an intermediate wheel situated between the rotary heads, the intermediate wheel, in turn, transmitting the rotation to a second gear wheel of the second rotary head. This aims to provide effective rotation means that ensure correct operation, minimizing noise and vibrations.

It further comprises a projection that protrudes from the lateral contour of the body in an area diametrically opposite to a part in which heads are available for the use thereof.

Thus, the projection is configured in a way that, by means of the support thereof on a support surface, the heads are arranged diametrically opposite to the support surface.

One important characteristic of the present invention is that the present brush may further comprise a whitening LED arranged in a way that, during the use of the brush, it emits a light on the dentition of a user.

Another important characteristic of the present invention is that the projection may also be a main on/off switch of the toothbrush. Furthermore, said projection may start the heads, the whitening LED or both.

In addition or alternatively, the present electric toothbrush may comprise a push button to start/stop the rotation of the heads, the whitening LED or both.

This way, the projection turns the toothbrush on/off while the push button starts or stops the heads and the whitening LED; the projection, in addition to turning the brush on/off, also starts or stops the rotation of the heads while the push button starts or stops the whitening LED; the projection, in addition to turning the brush on/off, also starts or stops the whitening LED while the push button starts or stops the rotation of the heads.

In another embodiment, the projection, in addition to turning the toothbrush on/off, also starts or stops the heads and the whitening LED. In this embodiment, the brush may not have the push button.

In another embodiment, which may or may not comprise any one of the preceding embodiments, the toothbrush further comprises a pressure sensor incorporated in the brush head, at the rear portion of the rotary heads and in contact with the same. The pressure sensor is connected in series between the motor and the activation element of the heads, wherein, depending on the embodiment, said activation element may be the projection or the push button. The pressure sensor enables knowing the pressure that the rotary heads exert on the user's teeth, thus being able to vary the speed of the rotary heads according to the different situations that may arise during brushing. Thus, if the sensor does not detect pressure, it means there is no contact with the teeth and it will stop the heads, saving battery energy and preventing unwanted vibrations. If the pressure sensor detects medium pressure, the speed of the heads will also be medium (approximately 500 r.p.m.). If the pressure sensor detects high pressure, the speed of the heads will also be high, approximately 1000 r.p.m. Changing from one speed to another (zero, medium, high) may take place in steps or be linear. In the case of linear variation, the speed of the rotary heads is proportional to the pressure exerted, which varies gradually between the minimum (zero) and the maximum (approximately 1000 rpm). If the pressure sensor detects excessively high pressure (greater than the damage threshold), the sensor will stop the rotation of the rotary heads to avoid damaging the user's teeth due to excess pressure on them.

### DESCRIPTION OF THE DRAWINGS

To better understand the description provided herein, the invention is complemented by a set of drawings, which, by way of illustration and not limitation represent the following:
- Figure 1 shows a perspective view of an electric toothbrush object of the present invention, according to a preferred embodiment, and it includes a detail enlargement.
- Figure 2 shows a perspective view of the inside of the electric toothbrush shown in Figure 1.

Following is a list of the different elements shown in the figures that are included in the invention:
- 1: = Body
- 1.1: = Brush head
- 1.2: = Lower end
- 2: = Driveshaft
- 3: = Bevel gear
- 4: = Conical gear wheel
- 5: = Gear wheel
- 6: = Intermediate wheel
- 6': = Intermediate support
- 7: = Head
- 7': = Rotation axis
- 7.1: = Bristles
- 7.2: = Disc
- 8: = Projection
- 9: = Push button
- 10: = Battery
- 11: = Motor
- 12: = Whitening LED
- 13: = Support surface
- 14: = Pressure sensor

### DETAILED DESCRIPTION OF A PREFERRED EMBODIMENT OF THE INVENTION

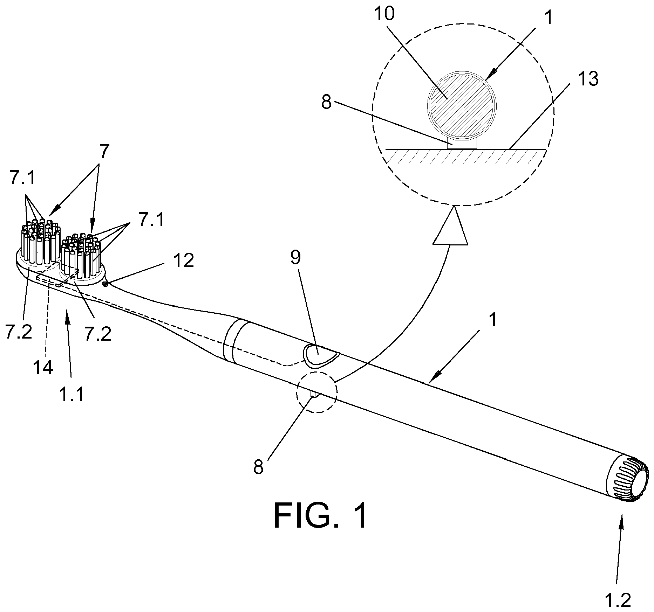

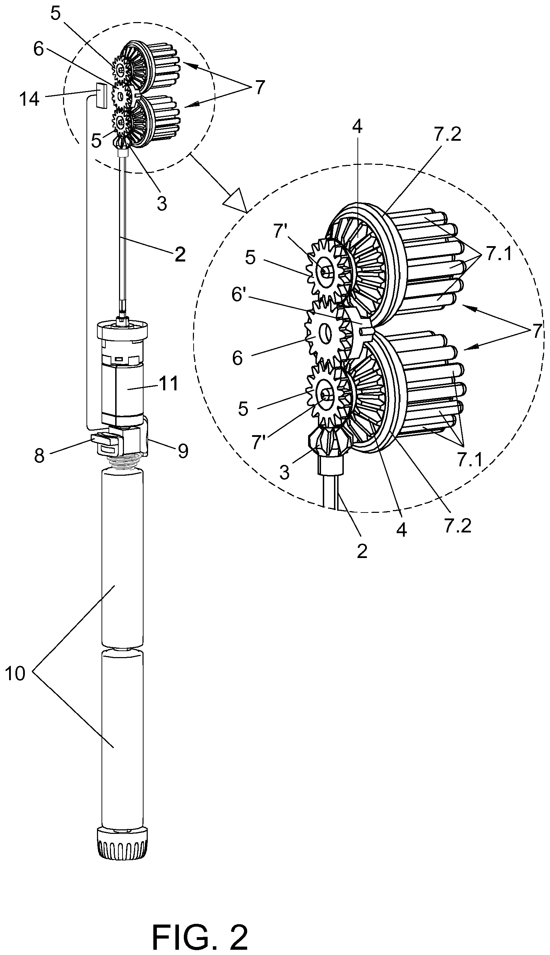

As already indicated, and as seen in the perspective views of Figures 1 and 2, the present invention describes an electric toothbrush which can support itself on an approximately horizontal support surface (13) with heads (7) pointing upwards. In the detail view of Figure 1, the present brush is seen supported on the support surface (13) by a projection (8).

In Figure 1, a body (1) of a brush is seen, which comprises a brush head (1.1), a lower end (1.2) and a joining section between the two. The present toothbrush comprises two rotary heads (7) in the brush head (1.1), said brush head (1.1) being axially detachable from the body (1).

The present electric toothbrush further comprises, as can be seen in Figure 2, at least an electric motor (11), a battery (10) as a power source for the motor (11) and a driveshaft (2) that transmits the rotary movement provided by the electric motor (11).

One end of the driveshaft (2) inside the brush head (1.1) longitudinally passes through the center thereof to a bevel gear (3). The bevel gear (3) is attached to said end of the driveshaft (2), such that the rotary movement transmitted by the motor (11) to the driveshaft (2) is also transmitted to the bevel gear (3).

Each of the heads (7) is aligned with the driveshaft (2), and each of the heads (7) comprises a set of bristles (7.1) and a disc (7.2), the set of bristles (7.1) being attached on one end to a face of the corresponding disc (7.2). A rotation axis (7') protrudes from the opposite face of each one of the discs (7.2), one of the ends thereof being attached to said discs (7.2). Each rotation axis (7') passes through a conical gear wheel (4) and a gear wheel (5). Said rotation axis (7') mechanically holds together the conical gear wheel (4), the disc (7.2) and the gear wheel (5) of each of the heads (7).

The two discs (7.2) that comprise the electric toothbrush shown in the figures are joined by an intermediate support (6'), which enables the rotation of the conical gear wheels (4). An intermediate gear wheel (6) is attached to the intermediate support (6'), but with the capacity to rotate freely. Said intermediate wheel (6) is arranged to simultaneously mesh with the two gear wheels (5).

In this way, and as can be seen in Figure 2, the electric motor (11) powered by the battery (10), preferably two cells, transmits a rotary movement to the driveshaft (2) which in turn transmits said rotary movement to the bevel gear (3). The bevel gear (3) meshes with the closest conical gear wheel (4), which in turn transmits the rotary movement to the bristles (7.2) and to the gear wheel (5) that are also closest to the bevel gear (3).

The gear wheel (5) closest to the bevel gear (3) transmits the rotary movement to the intermediate wheel (6), although in a direction of rotation opposite to that of said gear wheel (5), and the intermediate wheel (6) in turn transmits the rotary movement to the gear wheel (5) farthest from the bevel gear (3). The direction of rotation of this final gear wheel (5) is opposite that of the intermediate wheel (6), and therefore, the same as that of the other gear wheel (5).

Like in the other head (7), the gear wheel (5) transmits the rotary movement to the conical gear wheel (4), as well as to the disc (7.2) and therefore, to the bristles (7.1) comprised in the head (7) thereof.

The present invention further comprises the projection (8). This projection (8) protrudes from the outer contour of the body (1) of the brush, and preferably in an area diametrically opposite to where the heads (7), and more specifically the bristles (7.1), are arranged for the use of said brush. In the preferred embodiment shown in the figures, the projection (8) comprises a straight flat protruding end that provides a straight support area for stably supporting the present brush.

A first object of said projection (8) is to provide a stable support for the brush, such that the bristles (7.1) extend upwards in a way that toothpaste can be applied to them for the use thereof without falling from them. The more horizontal the support surface (13) of the brush, the more vertical the bristles (7.1) will be arranged, and therefore, the easier it will be for the toothpaste to remain on the end of the bristles (7.1) on which it has been applied.

In this way, with the present invention, the two hands can be used to apply the toothpaste, for example, because the tube of toothpaste is nearly empty. Furthermore, a user who can only use one hand can also apply the toothpaste without needing any type of help.

A second object of the projection (8) is, according to another preferred embodiment shown in the figures, to also act as a switch. In this preferred embodiment, the projection (8) is a main on/off switch of the electric toothbrush, and therefore, an open actuating switch; in other words, it is a switch that upon being actuated closes the circuit so that the electric current circulates. In another preferred embodiment, the projection (8) is a so-called "momentary" switch, in other words, a switch that must be actuated in order to close the circuit.

A third object of the projection (8) is to raise the brush head (1.1) of the brush with respect to said support surfaces (13), given that it is for the support thereof on surfaces. The reason for this separation between the brush head (1.1) and the support surfaces (13) is for hygienic reasons, since the brush head (1.1) comes in direct contact with the mouth of the brush user during the use thereof.

The present brush further comprises a whitening LED (12). The whitening LED (12) is arranged very close to the heads (7) so that the teeth of the brush user receive the light emitted by said whitening LED (12). The present invention further comprises another switch, which in the preferred embodiment shown in the figures is a push button (9) for starting/stopping the electric toothbrush; in other words, it is a momentary switch.

Thus, according to the preferred embodiment of the figures, the projection (8) turns the toothbrush on/off, while the push button (9) starts or stops the heads (7) and the whitening LED (12).

According to other preferred embodiments, when the projection (8), in addition to turning the brush on/off, also starts or stops the rotation of the heads (7), the push button (9) starts or stops the whitening LED (12); and when the projection (8), in addition to turning the brush on/off, also starts or stops the whitening LED (12), the push button (9) starts or stops the rotation of the heads (7). In the embodiment in which the projection (8) starts or stops the heads (7) and the whitening LED (12), the brush may not have the push button (9).

In another preferred embodiment, which may or may not comprise any one of the preceding embodiments, the toothbrush further comprises a pressure sensor (14) incorporated in the brush head (1.1), at the rear portion of the rotary heads (7) and in contact with the same. The pressure sensor is connected in series between the motor and the activation element of the heads, wherein, depending on the embodiment, said activation element may be the projection (8) or the push button (9). The pressure sensor (14) enables knowing the pressure that the rotary heads (7) exert on the user's teeth, thus being able to vary the speed of the rotary heads according to the different situations that may arise during brushing. Thus, if the sensor does not detect pressure, it means there is no contact with the teeth and it will stop the heads, saving battery (10) energy and preventing unwanted vibrations. If the pressure sensor (14) detects medium pressure, the speed of the heads will also be medium, approximately 500 r.p.m. If the pressure sensor detects high pressure, the speed of the heads will also be high, approximately 1000 r.p.m. Changing from one speed to another (zero, medium, high) may take place in steps or be linear. If the pressure sensor (14) detects excessively high pressure, the sensor will stop the rotation of the rotary heads (7) to avoid damaging the user's teeth due to excess pressure on them.

Once the nature of the invention is described, it is hereby stated that the same is not limited to the exact details of this description, but instead, modifications will be introduced into it which are considered appropriate by a person skilled in the art, provided that they do not alter the essential characteristics of the same. Accordingly, the scope of the invention is defined by the following claims.

## Claims

1. An electric toothbrush, which comprises a body (1) with longitudinal extension that in turn comprises a brush head (1.1) with two rotary heads (7) and a lower end (1.2), **characterized in that** said two rotary heads (7) are rotated by a driveshaft (2) actuated by a motor (11), by means of a bevel gear (3) that meshes with a conical gear wheel (4) of the first rotary head (7), such that a first gear wheel (5) connected to the conical gear wheel (4) transmits the rotation of an intermediate wheel (6) situated between the rotary heads (7), the intermediate wheel (6), in turn, transmitting the rotation to a second gear wheel (5) of the second rotary head (7).

2. The electric toothbrush according to claim 1, **characterized in that** it further comprises a projection (8) that protrudes from the lateral contour of the body (1) in an area diametrically opposite to a part in which heads (7) are available for the use thereof; such that the projection (8) is configured in a way that, by means of the support thereof on a support surface (13), the heads (7) are arranged diametrically opposite to the support surface (13).

3. The electric toothbrush according to claim 1, **characterized in that** it further comprises a whitening LED (12) arranged in a way that, during the use of the brush, it emits a light on a dentition of a user.

4. The electric toothbrush according to claim 1 or 2, **characterized in that** the projection (8) is also a main on/off switch of the electric toothbrush

5. The electric toothbrush according to claim 3, **characterized in that** the projection (8) starts the rotation of the heads (7), the whitening LED (12) or both.

6. The electric toothbrush according to claims 1 to 4, **characterized in that** it further comprises a push button (9) to start/stop the rotation of the heads (7), the whitening LED (12) or both.

7. The electric toothbrush according to claim 5 or 6, **characterized in that** further comprises a pressure sensor (14) incorporated in the brush head (1.1), wherein the pressure sensor (14) is connected in series between the motor (11) and the projection (8) or the push button (9).

8. The electric toothbrush according to claim 7, **characterized in that** the pressure sensor (14) varies the speed of the rotary heads (7) according to the pressure detected on the teeth of a user.

9. The electric toothbrush according to claim 8, **characterized in that** the pressure sensor (14) will set the speed of the rotary heads (7) to zero if the pressure detected by the sensor is zero or exceeds a damage threshold.

10. The electric toothbrush according to claim 8, **characterized in that** the pressure sensor (14) varies the speed of the rotary heads (7) between the minimum speed and the maximum speed in a linear way.

11. The electric toothbrush according to claim 8, **characterized in that** the pressure sensor (14) varies the speed of the rotary heads (7) between the minimum speed and the maximum speed in steps, said steps being the minimum speed, an intermediate speed and the maximum speed.
